# EUROPÄISCHE PATENTSCHRIFT

(11) **EP 0 515 980 B1**
(45) Veröffentlichungstag und Bekanntmachung des Hinweises auf die Patenterteilung: **15.12.1999**
(21) Anmeldenummer: 92108570.0
(22) Anmeldetag: 21.05.1992
(51) Int. Cl.: H04Q 11/06

(54) **Raum- und Zeit-Koppelelement**
Space-time switching stage
Etage de commutation temps-espace

(30) Priorität: 31.05.1991 DE 4117869
(43) Veröffentlichungstag der Anmeldung: 02.12.1992
(73) Patentinhaber: ALCATEL, 75008 Paris (FR)
(72) Erfinder: Wöhr, Peter, W-7000 Stuttgart 30 (DE)
(74) Vertreter: Brose, Gerhard, Dipl.-Ing.

(56) Entgegenhaltungen:
- EP-A- 0 009 256
- EP-A- 0 437 197
- US-A- 4 071 701
- US-A- 4 485 468
- US-A- 4 718 058
- US-A- 4 788 679
- US-A- 4 933 934

## Beschreibung

Die Erfindung betrifft ein Raum- und Zeit-Koppelelement nach dem Oberbegriff des Anspruchs 1.

Derartige Koppelelemente sind in der Vermittlungstechnik allgemein bekannt. Beispielhaft wird auf einen im synchronen Zeitmultiplex (STM) arbeitenden Koppelnetzbaustein verwiesen, der in "Elektrisches Nachrichtenwesen", Band 59, Nummer 1/2, 1985, Seiten 54 bis 59 von W. Frank et al. im Artikel "SYSTEM 12 - Doppelport des Koppelnetzbausteins" beschrieben ist. Als weiteres Beispiel wird ein "Integriertes Koppelelement" genannt, das im asynchronen Zeitmultiplex (ATM) arbeitet und in "Elektrisches Nachrichtenwesen" Band 64, Nummer 2/3, 1990, Seiten 156 bis 165, von D. Boettle et al. im Artikel "Das ATM-Koppelfeld von Alcatel und seine Eigenschaften" beschrieben ist.

Es ist das Bestreben eines jeden Entwicklungsingenieurs, das Verhältnis zwischen Aufwand und Nutzen günstig zu beeinflussen. Die laufend fortschreitende Technik erlaubt beispielsweise immer wieder einen Übergang zu einer höheren Arbeitsgeschwindigkeit, wodurch nahezu ohne Mehraufwand die Kapazität und damit der Nutzen erhöht werden kann. Beim oben schon beispielhaft erwähnten Vermittlungssystem SYSTEM 12 wird auf den Verbindungsleitungen eine Übertragungsgeschwindigkeit von 4 Mbit/s (genau 4096 kbit/s) verwendet. Die heute dort verwendete Technologie würde aber auch noch 32 Mbit/s zulassen. Der ganze Aufbau, insbesondere Gestelle, Verdrahtungsplatinen und Stecker könnten unverändert beibehalten werden.

Es ist aber zu berücksichtigen, daß bei einer Vermittlungsstelle einerseits eine Vielzahl verschiedenartiger Peripheriebaugruppen durch ein Koppelnetz miteinander verbunden ist und andererseits ein stufenweiser Ausbau möglich sein soll. Es können weder alle Arten von Peripheriebaugruppen gleichzeitig für eine erhöhte Übertragungsgeschwindigkeit umentwickelt werden, noch ist im Falle eines Weiterausbaus ein Austausch schon vorhandener Teile erwünscht. Auch das Problem der Ersatzteilbeschaffung ist zu berücksichtigen.

Das gleiche Problem ist auch für das zukünftige ATM-System vorhersehbar, wo jetzt schon Übertragungsgeschwindigkeiten von zunächst 150 Mbit/s und später 600 Mbit/s, möglicherweise sogar 1,2 Gbit/s im Gespräch sind.

Die vorliegende Erfindung löst dieses Problem durch Koppelelemente nach der Lehre des Hauptanspruchs. Durch Verwendung von Koppelelementen, deren Ein- und Ausgänge einzeln zwischen zwei (oder mehr) Übertragungsgeschwindigkeiten umschaltbar sind, sind nicht nur alle genannten Probleme gelöst, es ergeben sich darüber hinaus noch einige Vorteile. So kann die Umschaltmöglichkeit auch dazu verwendet werden, die Übertragungsgeschwindigkeit an den aktuellen Bedarf anzupassen und so die Verlustleistung und die Störstrahlung im Mittel zu senken. Auch besteht (bei STM) die Möglichkeit, durch Zusammenfassung mehrerer Kanäle Verbindungen höherer Kapazität zu ermöglichen.

Aus EP-A2-0 009 256 ist eine Vermittlungsstelle bekannt, bei der ebenfalls an jeder Eingangsleitung für sich und an jeder Ausgangsleitung für sich mit unterschiedlichen Übertragungsgeschwindigkeiten gearbeitet werden kann. Tatsächlich arbeitet hier jedoch die gesamte Vermittlungsstelle physikalisch mit der höchsten Übertragungsgeschwindigkeit und dem dafür erforderlichen Takt. Durch Bildung von Unterkanälen und damit zusammenhängend von Überrahmen ist es dabei möglich, daß auf einer Leitung verschiedene Signale mit verschiedenen logischen Übertragungsgeschwindigkeiten übertragen werden. Es ist hier nicht vorgesehen und auch nicht ersichtlich, daß bzw. wie nur ein Teil der Vermittlungsstelle, beispielsweise eine neue Ausbaustufe, mit einem höheren Takt betrieben wird, während der Rest (noch) mit einem niedrigeren Takt betrieben wird. Auch eine Anpassung an den aktuellen Bedarf, also die aktuelle Lastsituation, ist hier nicht möglich.

Weitere Beispiele vorteilhafter Ausgestaltungen der Erfindung sind den Unteransprüchen zu entnehmen.

Im folgenden wird die Erfindung anhand eines Ausführungsbeispiels unter Zuhilfenahme der bei beiliegenden Zeichnungen weiter erläutert.
- Fig. 1: zeigt ein Blockschaltbild eines Ausführungsbeispiels eines erfindungsgemäßen Raum- und Zeit-Koppelelements.
- Fig. 2: zeigt sehr schematisch den Vermittlungsablauf in einem erfindungsgemäßen Koppelelement.

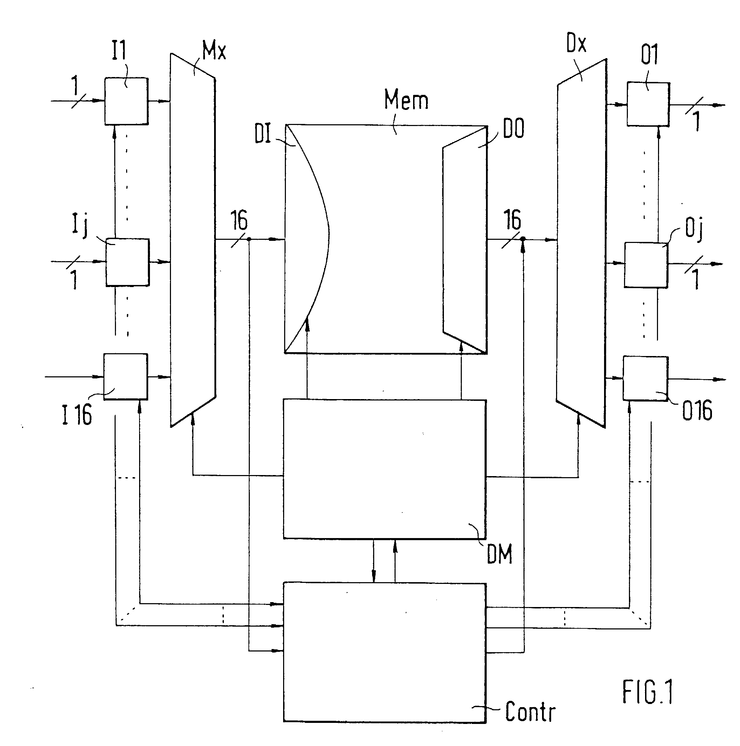

Das Koppelelement nach Fig. 1 weist 16 Eingangsschaltungen I1, ..., I16, einen Multiplexer Mx, einen zentralen Speicher Mem, einen Demultiplexer Dx, 16 Ausgangsschaltungen 01, ..., 016, sowie eine Steuereinheit Contr mit zugeordneter Dekodiermatrix DM auf. Der zentrale Speicher Mem wiederum weist einen Eingangsdecoder DI, einen Ausgangsdecoder D0, sowie 4096 nicht näher dargestellte Speicherplätze für je ein Datenwort zu 16 Bit auf.

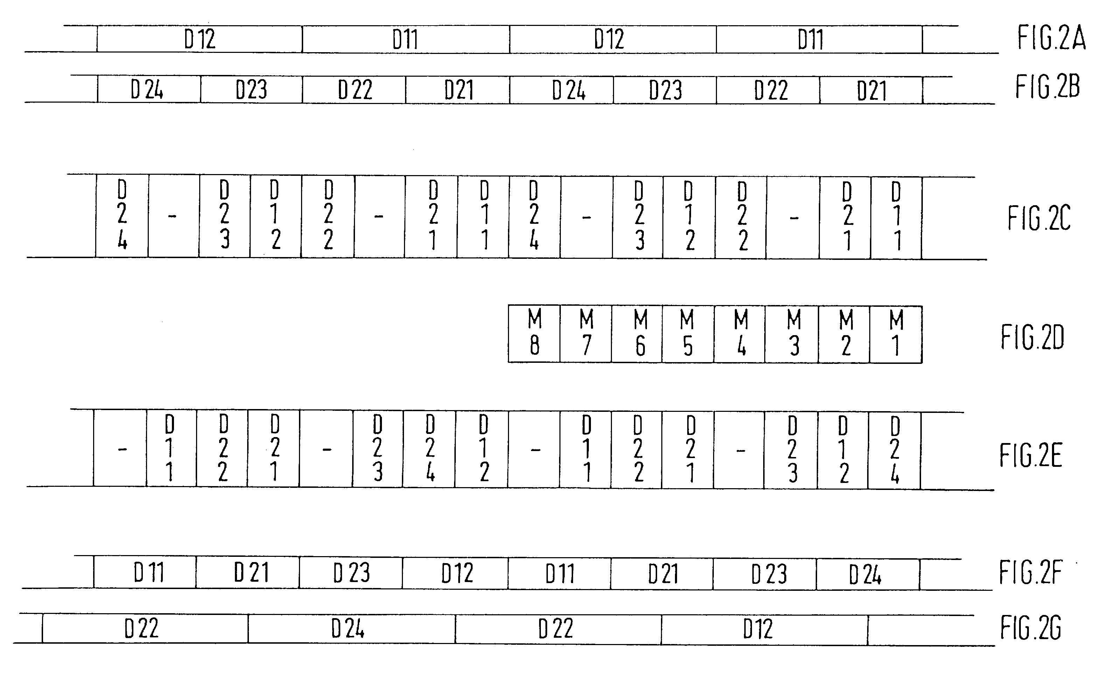

Für einen stark vereinfachten Fall wird anhand der Fig. 2 der Vermittlungsablauf dargestellt. Es wird der praktisch einfachste Fall eines erfindungsgemäßen Koppelelements angenommen. Dieses Koppelelement hat zwei Eingänge und zwei Ausgänge. Es können pro Eingang und Ausgang jeweils zwei oder, nach Umschaltung der Übertragungsgeschwindigkeit, vier Kanäle übertragen werden. Fig. 2 zeigt für diesen Fall verschiedene zeitliche Abläufe, Fig. 2a, b, c, e, f, g, und einer Speicherplan, Fig. 2d.

Am ersten Eingang, Fig. 2a, kommen der Reihe nach die Datenwörter D11 und D12 zweier auf zwei Kanäle aufgeteilter Eingangssignale an. Am zweiten Eingang, Fig. 2b, kommen in derselben Zeit der Reihe nach die Datenwörter D21, D22, D23 und D24 von vier auf vier Kanäle aufgeteilten Eingangssignalen an. Die Unterteilung dieser Datenwörter in verschiedene Bits ist nicht dargestellt. Die Signale beider Eingänge werden zu einem einzigen Signal, Fig. 2c, zusammengefaßt. Dieses zusammengefaßte Signal, das im Beispiel nach Fig. 1 dem Ausgangssignal des Multiplexers Mx entspricht, hat immer denselben Aufbau, unabhängig von den Übertragungsgeschwindigkeiten an den beiden Eingängen.

Es weist eine Rahmenstruktur auf, die auf der schnelleren der beiden Übertragungsgeschwindigkeiten aufgebaut ist und hierfür pro Kanal und Eingang einen Zeitschlitz aufweist. Im Beispiel sind an zwei Eingängen je maximal vier Kanäle, also insgesamt maximal acht Kanäle möglich. Hierfür sind in der Rahmenstruktur acht Zeitschlitze vorgesehen. Diese Zeitschlitze werden zyklisch, im vorliegenden Fall mit nur zwei Eingängen demnach abwechselnd, den Eingängen zugeordnet. Für Eingänge, die mit der langsameren Übertragungsgeschwindigkeit betrieben werden, bleibt jeder zweite Zeitschlitz frei. Im vorliegenden Fall ergibt sich damit der Reihe nach folgende Belegung: D11, D21, frei, D22, D12, D23, frei, D24.

Der Inhalt dieser Zeitschlitze wird nun der Reihe nach im zentralen Speicher Mem abgespeichert. Die Ausgabe aus dem zentralen Speicher Mem erfolgt in veränderter Reihenfolge, die sicherstellt, daß bei zyklischer Verteilung auf die Ausgänge und deren Kanäle die gewünschte Vermittlungsfunktion erfüllt ist. Die Rahmenstruktur am Ausgang des zentralen Speichers Mem ist dieselbe wie die am Eingang. Im vorliegenden Fall ergibt sich der Reihe nach die folgende Belegung der einzelnen Zeitschlitze am Ausgang des Speichers Mem und damit am Eingang des Demultiplexers Dx (Fig.2e): D24, D12, D23, frei, D21, D22, D11, frei.

Für die Zwischenspeicherung im zentralen Speicher Mem sind hierfür acht Speicherplätze M1, ..., M8 (Fig. 2d) notwendig und vorgesehen. Für das Einschreiben in den Speicher Mem und das Auslesen aus dem Speicher Mem sind vor allem die beiden aus dem Stand der Technik für Zeitmultiplexvermittlung bekannten Methoden anwendbar, wobei entweder beim Einschreiben zyklisch adressiert und beim Auslesen entsprechend der Vermittlungsaufgabe gezielt adressiert wird oder umgekehrt. Die Reihenfolge der Adressierung beim Einschreiben kann also M1, M2, ..., M7, M8 und beim Auslesen M8, M5, M6, M3, M2, M4, M1, M7 sein oder beim Einschreiben M8, M5, M6, M3, M2, M4, M1, M7 und beim Auslesen M1, M2, ..., M7, M8.

Die Steuerung dieses Einschreibens und Auslesens kann in an sich bekannter, nicht erfindungsspezifischer Weise erfolgen. Die hierfür erforderlichen Baugruppen sind hier als Eingangsdecoder DI, Ausgangsdecoder D0, Decodiermatrix DM und Steuereinheit Contr dargestellt.

Durch die Decodiermatrix DM wird beispielsweise folgender Ablauf gesteuert:
1. Mx verbindet I1 mit D1
   D1 verbindet Mx mit M1
   in M1 wird D11 eingeschrieben.
2. D0 verbindet M8 mit Dx
   Dx verbindet D0 mit 01
   aus M8 wird D24 ausgelesen
   01 übernimmt Daten.
3. Mx verbindet I2 mit D1
   D1 verbindet Mx mit M2
   in M2 wird D21 eingeschrieben.
   .
   .
   .
15. Mx verbindet I2 mit D1
   D1 verbindet Mx mit M5
   in M5 wird D12 eingeschrieben.
16. Jetzt müßte M7 über D0 und Dx mit 02 verbunden werden.
   02 arbeitet aber mit der geringeren
   Übertragungsgeschwindigkeit, ist noch mit der Ausgabe von D22 beschäftigt und kann keine Daten übernehmen.
   In M7 sind auch keine gültigen Daten enthalten.
   Ob M7 mit 02 verbunden wird oder nicht, ist unerheblich. 02 übernimmt jedenfalls keine Daten.

Dieser Ablauf (oder ein anderer, der die gleiche Vermittlungsaufgabe löst), kehrt regelmäßig wieder und ist in der Decodiermatrix DM einprogrammiert. Diese Programmierung muß immer dann durch die Steuereinheit Contr geändert werden, wenn eine Verbindung auf- oder abgebaut werden soll.

Im Beispiel nach Fig. 1 erhält die Steuereinheit Contr die für die Steuerung erforderliche Information als Bestandteil der Datenströme, die auch die zu vermittelnden Daten enthalten; also über die Eingangsschaltungen I1, ..., I16. Hierzu ist ein Eingang der Steuerschaltung Contr mit dem Ausgang des Multiplexers Mx verbunden. Entsprechend ist zur Ausgabe von Steuerinformationen, beispielsweise für Rückmeldungen, ein Ausgang der Steuereinheit Contr mit dem Eingang des Demultiplexers Dx verbunden. Bei vielen im Zeitmultiplex arbeitenden Systemen ist ohnehin ein Kanal für die Weitergabe von Steuerdaten vorgesehen, beispielsweise auch bei der eingangs erwähnten Vermittlungsstelle Bauart SYSTEM 12. In diesem Kanal könnte dann auch die Information für die Steuereinheit Contr enthalten sein, wie dies auch bei der genannten Vermittlungsstelle der Fall ist. Im einfachsten Fall besteht eine solche Steuerinformation aus der Adresse des zu ändernden Speicherplatzes der Decodiermatrix DM und den dort neu einzuschreibenden Daten.

Das bereits beschriebene Ausgangssignal des zentralen Speichers Mem mit der Rahmenstruktur nach Fig. 2e wird im Demultiplexer Dx zyklisch zu den Ausgangsschaltungen durchgeschaltet. Im vereinfachten Beispiel nach Fig. 2 arbeitet die erste der beiden Ausgangsschaltungen mit der höheren Übertragungsgeschwindigkeit und übernimmt alle ihr vom Demultiplexer Dx angebotenen Daten, wobei die in Fig. 2f dargestellte Datenfolge D24, D23, D21, D11 entsteht. Die zweite der beiden Ausgangsschaltungen arbeitet mit der niedrigeren Übertragungsgeschwindigkeit und übernimmt deshalb nur jedes zweite Mal die ihr vom Demultiplexer angebotenen Daten, wobei die in Fig. 2g dargestellte Datenfolge D12, D22 entsteht.

Bei der auf diese Weise durchgeführten Vermittlung der einzelnen Kanäle behalten die Daten D12 ihre niedrige Übertragungsgeschwindigkeit bei, die Daten D11 werden von der niedrigen zur höheren Übertragungsgeschwindigkeit umgesetzt, die Daten D21, D23 und D24 behalten die höhere Übertragungsgeschwindigkeit bei und die Daten D22 werden von der höheren zur niedrigen Übertragungsgeschwindigkeit umgesetzt. Die Dateninhalte bleiben dabei selbstverständlich unverändert.

Die Funktion der Eingangsschaltungen I1, ..., I16 ist zunächst dieselbe wie bei herkömmlichen Koppelelementen. Hierzu gehört die Synchronisation der ankommenden Signale auf den internen Takt des Koppelelements. Üblicherweise ist nur die Phase anzupassen. Weiter erfolgt eine Serien-Parallel-Wandlung und eine Zwischenspeicherung bis zur Weiterleitung durch den Multiplexer Mx. Im vorliegenden Fall wird von Datenwörtern zu je 16 Bit ausgegangen, die innerhalb des Koppelelements parallel verarbeitet werden.

Die Eingangsschaltungen gemäß der Erfindung weisen nun die Besonderheit auf, daß sie zwischen zwei Übertragungsgeschwindigkeiten umschaltbar sind. Dies kann dadurch erfolgen, daß ihre Synchronisationseinrichtungen zwischen zwei Takten umschaltbar sind oder auch dadurch, daß ihnen von der Steuereinheit Contr jeweils einer von zwei Takten geliefert wird. Es ist aber auch möglich, daß jede Eingangsschaltung pro Übertragungsgeschwindigkeit (es können auch mehr als zwei sein) eine Synchronisationseinrichtung aufweist. Jede Synchronisationseinrichtung versucht dann, sich auf den ankommenden Datenstrom zu synchonisieren, was nur einer Synchronisationseinrichtung pro Eingangsschaltung gelingen kann, deren Ausgangssiganl dann verwendet wird. Auf diese Weise kann eine automatische Umschaltung erreicht werden. Die ermittelte Übertragungsgeschwindigkeit muß der Steuereinheit Contr gemeldet werden.

Für den Fall der von außen gesteuerten Umschaltung muß der Steuerbefehl hierzu über die Eingangsschaltung und den Multiplexer zur Steuereinheit gelangen und von dort die Umschaltung veranlaßt werden.

Auch die Ausgangsschaltungen 01, ..., 016 arbeiten an sich wie üblich. Im einfachsten Fall enthalten sie je einen Parallel-Serien-Wandler, der je ein vom Demultiplexer kommendes Datenwort parallel übernimmt und mit dem vorgesehenen Takt seriell ausgibt. Im vorliegenden Fall braucht nur die Übernahme der Daten richtig veranlaßt und der richtige Takt gewählt zu werden, um die Umschaltung zu erreichen. Entweder der ausgewählte Takt oder ein Schaltsignal für die Auswahl des Takts muß von der Steuereinheit Contr kommen.

Für die Umschaltung der Übertragungsgeschwindigkeiten in den Ausgangsschaltungen können verschiedene Möglichkeiten, auch alternativ, vorgesehen sein.

Die Umschaltung kann, wie für die Eingangsschaltungen beschrieben, durch von außen kommende Steuerbefehle erfolgen.

Häufig, beispielsweise bei Verwendung in Umkehrkoppelfeldern, ist jeder Ausgang einem Eingang und damit jede Ausgangsschaltung einer Eingangsschaltung zugeordnet, weil die Verbindungen zwischen den Koppelelementen bidirektional betrieben werden. In diesem Fall ist das Verkehrsaufkommen meist in beiden Richtungen etwa gleich. Insbesondere ist in diesem Fall sichergestellt, daß die angestrebte höhere Übertragungsgeschwindigkeit an einem zusammengehörigen Paar von Ausgang und Eingang entweder gleichzeitig zulässig oder gleichzeitig nicht zulässig ist, je nachdem ob das im angeschlossenen Koppelelement gegenüberliegende Paar von Eingang und Ausgang auch die höhere Übertragungsgeschwindigkeit verarbeiten kann oder nur die niedrigere. In diesem Fall genügt es, die Umschaltung der Übertragungsgeschwindigkeit für Eingangsschaltung und Ausgangsschaltung gemeinsam durchzuführen. Ob dies aufgrund einer Ermittlung des Verkehrsaufkommens erfolgt oder aufgrund eines von außen kommenden Steuerbefehls, ist zweitrangig.

Auch eine Ermittlung des Verkehrsaufkommens für die einzelnen Ausgangsschaltungen ist möglich. Hierfür muß in der Steuerschaltung Contr nur ermittelt werden, wieviele Speicherplätze im zentralen Speicher Mem für die einzelnen Ausgangsschaltungen jeweils tatsächlich belegt sind. Ob eine bestimmte Ausgangsschaltung überhaupt auf eine höhere Übertragungsgeschwindigkeit umgeschaltet werden darf, muß bereits bei der Belegung der Speicherplätze berücksichtigt werden (zumindest im Fall des synchronen Zeitmultiplexbetriebs).

Bei gleichzeitiger Umschaltung zusammengehöriger Eingangs- und Ausgangsschaltungen aufgrund des Verkehrsaufkommens ist bevorzugt zunächst das höhere der beiden Verkehrsaufkommen auszuwählen und dann dieses der Entscheidung zugrunde zu legen.

Eine gemeinsame Umschaltung zusammengehöriger Eingangs- und Ausgangsschaltungen verbietet sich dann, wenn im Koppelelement auch Kopien erzeugt werden. Dies erfolgt dadurch, daß ein in einen Speicherplatz einmal eingeschriebenes Datenwort mehrmals wieder ausgelesen wird. Eine solche Betriebsweise, die an sich bekannt ist, bietet sich für ein erfindungsgemäßes Koppelelement ganz besonders an, weil hier die dafür erforderliche hohe Zahl von Abnehmerkanälen auch zur Verfügung steht.

Auch für eine weitere, ebenfalls an sich bekannte Betriebsweise bietet sich dieses Koppelelement ganz besonders an: Es besteht immer wieder der Wunsch, mehrere Kanäle gleichzeitig für ein und dieselbe Verbindung zu verwenden, um so eine Verbindung mit höherer Kapazität aufzubauen. Durch Verwendung der höheren Übertragungsgeschwindigkeit und Zusammenfassung solcher Zeitschlitze, die bei der niedrigen Übertragungsgeschwindigkeit in denselben Zeitschlitz fielen, ist dies recht einfach möglich.

Die erfinderische Idee ist grundsätzlich auch auf Koppelelemente anwendbar, die für die derzeit im Kommen befindliche Betriebsart ATM ausgelegt sind. Bei ATM werden die zusammengehörigen Teile einer Nachricht nicht wie bei der herkömmlichen Zeitmultiplextechnik STM in periodisch wiederkehrenden Zeitschlitzen eines Zeitrahmens übertragen, sondern in den Informationsteilen von Zellen (oder Paketen), die in unregelmäßigen Abständen zwischen Zellen anderer Nachrichten und Leer- und Steuerzellen übertragen werden. Außer dem genannten Informationsteil enthält jede Zelle noch einen Zellkopf, der mindestens diejenigen Angaben enthält, die bei STM durch die zeitliche Festlegung gegeben sind, nämlich die Zugehörigkeit zu einer ganz bestimmten Nachricht.

Bei ATM ist die Anwendung der vorliegenden erfinderischen Idee beinahe noch einfacher. Ein Charakteristikum von ATM ist das statistisch schwankende Verkehrsaufkommen. Zwischen den Eingangs- und Ausgangsschaltungen eines Koppelelements muß hier immer das maximal mögliche Verkehrsaufkommen berücksichtigt werden, im vorliegenden Fall also das, das sich ergibt, wenn an allen Eingängen die höhere Übertragungsgeschwindigkeit verwendet wird. Außerdem sind bei ATM in der Regel auch Einrichtungen zur Ermittlung des Verkehrsaufkommens vorhanden, beispielsweise die Füllstandsanzeiger der hier immer erforderlichen Warteschlangen (FIFOs). Im einfachsten Fall sind hier nur noch die Takte in den Eingangs- und Ausgangsschaltungen umschaltbar auszuführen. Beispiele für ATM-Koppelelemente sind ausreichend bekannt, beispielsweise aus dem eingangs erwähnten Artikel von D. Böttle et al.

## Patentansprüche

1. Raum- und Zeit-Koppelelement mit einer Mehrzahl von Eingangsschaltungen (I1, ..., I16) für je eine Eingangsleitung, auf der im Zeitmultiplex eine Mehrzahl von Eingangssignalen empfangbar ist, mit einer Mehrzahl von Ausgangsschaltungen (01, ..., 016) für je eine Ausgangsleitung, auf der im Zeitmultiplex eine Mehrzahl von Ausgangssignalen abgebbar ist und mit Koppelmitteln (Mx, Mem, Dx), um alle Eingangssignale und alle Ausgangssignale wahlweise einander zuzuordnen, wobei jede Eingangsschaltung Synchronisationsmittel aufweist, um die auf ihr ankommenden Eingangssignale auf einen vorgegebenen Takt zu synchronisieren und wobei jede Ausgangsschaltung Ausgabemittel aufweist, um die auf ihr abzugebenden Ausgangssignale mit einem vorgegebenen Takt abzugeben, **dadurch gekennzeichnet, daß** jede Eingangsschaltung (I1, I16) für sich und jede Ausgangsschaltung (01, 016) für sich zwischen zwei oder mehr Übertragungsgeschwindigkeiten umschaltbar ist, indem in jeder Eingangsschaltung (I1, I16) für sich die Synchronisationsmittel und in jeder Ausgangsschaltung (O1, O16) für sich die Ausgabemittel auf einen der jeweiligen Übertragungsgeschwindigkeit entsprechenden Takt einstellbar sind.

2. Koppelelement nach Anspruch 1, dadurch gekennzeichnet, daß jede Eingangsschaltung (I1, ..., I16) eine Sensorschaltung aufweist, die die jeweilige Übertragungsgeschwindigkeit der auf der zugehörigen Eingangsleitung ankommenden Signale erfaßt und die Eingangsschaltung auf die festgestellte Übertragungsgeschwindigkeit umschaltet.

3. Koppelelement nach Anspruch 1, dadurch gekennzeichnet, daß jeder Ausgangsschaltung (01, ..., 016) ein Sensor zugeordnet ist, der den für die zugehörige Ausgangsleitung bestimmten Verkehr erfaßt und die Übertragungsgeschwindigkeit entsprechend umschaltet.

4. Koppelelement nach Anspruch 1, dadurch gekennzeichnet, daß die Umschaltung in den Eingangsschaltungen (I1, ..., I16) und in den Ausgangsschaltungen (01, ..., 016) durch von außen kommende Steuerbefehle erfolgt.

5. Koppelelement nach Anspruch 1, dadurch gekennzeichnet, daß jede Ausgangsschaltung (0j) einer Eingangsschaltung (Ij) zugeordnet ist und daß in beiden gemeinsam die Übertragungsgeschwindigkeit umgeschaltet wird.

6. Koppelelement nach Anspruch 1, dadurch gekennzeichnet, daß die Eingangs- und Ausgangssignale aus in gleichen zeitlichen Abständen aufeinanderfolgenden Datenwörtern bestehen, die zu einem synchronen Zeitmultiplex (STM) zusammengefaßt sind.

7. Koppelelement nach Anspruch 1, dadurch gekennzeichnet, daß die Eingangs- und Ausgangssignale aus in willkürlichen zeitlichen Abständen aufeinanderfolgenden Datenpaketen oder Zellen bestehen, die zu einem asynchronen Zeitmultiplex (ATM) zusammengefaßt sind.

8. Koppelelement nach Anspruch 1, dadurch gekennzeichnet, daß die Koppelmittel einen zentralen Speicher (Mem), einen Multiplexer (Mx) und einen Demultiplexer (Dx) aufweisen, und daß der Multiplexer (Mx) jede Eingangsschaltung (I1, ..., I16) mit dem Eingang des Speichers (Mem) und der Demultiplexer (Dx) den Ausgang des Speichers (Mem) mit jeder Ausgangsschaltung (01, ..., 016) verbinden kann.

9. Koppelelement nach Anspruch 6 und 8, dadurch gekennzeichnet, daß der Speicher (Mem) so aufgebaut ist, daß er soviele Datenwörter einzeln adressierbar zu speichern vermag, wie mit der höchsten Übertragungsgeschwindigkeit während der Zeit einer Rahmendauer der niedrigsten Übertragungsgeschwindigkeit übertragen werden.

## Claims

1. A space/time switching element comprising a plurality of input circuits (I1, ..., I16) each intended to be associated with one of a plurality of input lines on each of which a plurality of input signals are receivable in a time-division multiplex mode, a plurality of output circuits (01, ..., 016) each intended to be associated with one of a plurality of output lines on each of which a plurality of output signals are placeable in a time-division multiplex mode, and switching means (Mx, Mem, Dx) for selectively associating all input signals and all output signals with one another, each input circuit comprising synchronizing means for synchronizing the input signals received by it with a predetermined clock signal, and each output circuit comprising output means for delivering the output signals at a predetermined clock rate, **characterized in** that each input circuit (I1, ..., I16) and each output circuit (01, ..., 016) are separately switchable between two or more transmission rates by the synchronizing means in each input circuit (I1, I16) and the output means in each output circuit (01, 016) being separately settable to a clock rate equal to the respective transmission rate.

2. A switching element as claimed in claim 1, characterized in that each input circuit (I1, ..., I16) includes a sensor circuit which determines the respective transmission rate of the signals incoming on the associated input line and switches the input circuit to the transmission rate thus determined.

3. A switching element as claimed in claim 1, characterized in that each output circuit (01, ..., 016) has a sensor associated with it which determines the traffic intended for the associated output line and switches the transmission rate accordingly.

4. A switching element as claimed in claim 1, characterized in that the switching in the input circuits (I1, ..., I16) and in the output circuits (01, ..., 016) is initiated by external control instructions.

5. A switching element as claimed in claim 1, characterized in that each output circuit (0j) is associated with one input circuit (Ij), and that the transmission rate is switched in both together.

6. A switching element as claimed in claim 1, characterized in that the input and output signals consist of data words following each other at regular time intervals, which are combined into a synchronous time-division multiplex (STM) signal.

7. A switching element as claimed in claim 1, characterized in that the input and output signals consist of data packets or cells following each other at arbitrary time intervals, which are combined into an asynchronous time-division multiplex (ATM) signal.

8. A switching element as claimed in claim 1, characterized in that the switching means are a main memory (Mem), a multiplexer (Mx), and a demultiplexer (Dx), that the multiplexer (Mx) is capable of connecting each input circuit (I1, ..., I16) to the input of the memory (Mem), and that the demultiplexer (Dx) is capable of connecting the output of the memory (Mem) to each output circuit (01, ..., 016).

9. A switching element as claimed in claims 6 and 8, characterized in that the memory (Mem) is constructed so as to be capable of storing as many discretely addressable data words as can be transmitted at the highest transmission rate during one frame period of the lowest transmission rate.

## Revendications

1. Elément de couplage dans l'espace et dans le temps comportant un grand nombre de circuits d'entrée (I1, ..., I16) chacun prévu pour être associé à une ligne d'entrée, sur laquelle dans le multiplexage temporel un grand nombre de signaux d'entrée peut être reçu, comportant un grand nombre de circuits de sortie (O1, ..., 016) chacun prévu pour être associé à une ligne de sortie, sur laquelle dans le multiplexage temporel un grand nombre de signaux de sortie peut être émis et comportant des dispositifs de couplage (Mx, Mem, Dx) pour affecter les uns aux autres tous les signaux d'entrée et tous les signaux de sortie au choix, chaque circuit d'entrée présentant des moyens de synchronisation, pour synchroniser sur une cadence prescrite les signaux d'entrée arrivant sur lui et chaque circuit de sortie présentant des moyens de sortie pour émettre les signaux de sortie devant sortir par lui à une cadence prescrite, caractérisé en ce que chaque circuit d'entrée (I1, I16) en soi et chaque circuit de sortie (O1, 016) en soi est commutable sur deux vitesses de transmission ou plus, par le fait que dans chaque circuit d'entrée (I1, I16) en soi les moyens de synchronisation et dans chaque circuit de sortie (O1, 016) en soi les moyens de sortie sont commutables sur une cadence correspondant à la vitesse de transmission respective.

2. Elément de couplage conformément à la revendication 1, caractérisé en ce que chaque circuit d'entrée (I1, ..., I16) présente un circuit capteur qui enregistre la vitesse de transmission respective des signaux arrivant sur la ligne d'entrée correspondante et commute le circuit d'entrée sur la vitesse de transmission constatée.

3. Elément de couplage selon la revendication 1, caractérisé en ce qu'à chaque circuit de sortie (O1, ..., 016) est affecté un capteur qui enregistre le débit destiné à la ligne de sortie afférente et commute en conséquence la vitesse de transmission.

4. Elément de couplage selon la revendication 1, caractérisé en ce que la commutation dans les circuits d'entrée (I1, ..., I16) et dans les circuits de sortie (O1, ..., O16) s'effectue par des instructions de commande venant de l'extérieur.

5. Elément de couplage selon la revendication 1, caractérisé en ce que chaque circuit de sortie (Oj) est affecté à un circuit d'entrée (Ij) et en ce que dans les deux, la vitesse de transmission est commutée en commun.

6. Elément de couplage selon la revendication 1, caractérisé en ce que les signaux d'entrée et de sortie se composent de données élémentaires se suivant dans les mêmes intervalles de temps qui sont réunis en un multiplexage temporel synchrone (STM).

7. Elément de couplage selon la revendication 1, caractérisé en ce que les signaux d'entrée et de sortie se composent de paquets de données ou de cellules qui se suivent dans des intervalles de temps aléatoires qui sont réunis en un multiplexage temporel asynchrone (ATM).

8. Elément de couplage selon la revendication 1, caractérisé en ce que les moyens de couplage comportent une mémoire centrale (Mem), un multiplexeur (Mx) et un démultiplexeur (Dx) et en ce que le multiplexeur (Mx) peut relier chaque circuit d'entrée (I1, ..., I16) à l'entrée de la mémoire (Mem) et le démultiplexeur (Dx), la sortie de la mémoire (Mem) à chaque circuit de sortie (O1, ..., O16).

9. Elément de couplage selon les revendications 6 et 8, caractérisé en ce que la mémoire (Mem) est conçue de sorte qu'elle a la capacité d'enregistrer et d'adresser individuellement le nombre de mots de données élémentaires qui sont transmis à la vitesse de transmission la plus élevée lors d'une plage de durée de la vitesse de transmission la plus basse.
